# EUROPEAN PATENT SPECIFICATION

(11) **EP 1 904 778 B1**
(45) Date of publication and mention of the grant of the patent: **15.05.2013**
(21) Application number: 06758028.2
(22) Date of filing: 05.07.2006
(51) Int. Cl.: F16L 3/04, F16L 3/10, F16L 3/12

(54) **TUBE BEDDING**
ROHRUNTERLAGE
ASSISE DE TUYAU

(30) Priority: 05.07.2005 SE 0501553
(43) Date of publication of application: 02.04.2008
(73) Proprietor: Intermultilock AB, 444 41 Stenungsund (SE)
(72) Inventor: PETTERSSON, Krister, 444 41 Stenungsund (SE)
(74) Representative: Valea AB
(86) International application number: PCT/SE2006/000842
(87) International publication number: WO 2007/004963

(56) References cited:
- DE-A1- 2 745 094
- DE-U- 7 412 348
- DE-U1- 20 104 303
- JP-A- 57 090 485
- US-A- 1 646 423
- US-A- 5 215 281
- US-A- 6 142 428
- DATABASE WPI Week 200334, Derwent Publications Ltd., London, GB; Class Q67, AN 2003-359104, XP003005914 & JP 2003 113960 A (MURAKAMI S) 18 April 2003
- DATABASE WPI Week 199911, Derwent Publications Ltd., London, GB; Class Q42, AN 1999-126210, XP003005915 & JP 11 002 365 A (SUNLIGHT KK) 06 October 1999
- DATABASE WPI Week 199911, Derwent Publications Ltd., London, GB; Class Q42, AN 1999-126209, XP003005916 & JP 11 002 362 A (SUNLIGHT KK) 06 October 1999
- DATABASE WPI Week 199615, Derwent Publications Ltd., London, GB; Class Q42, AN 1996-142151, XP003005917 & JP 08 028 755 A (KITAGAWA H) 02 February 1996

## Description

### Technical field

The present invention relates to a tube bedding, preferably to be used for mounting of tube lengths upon walls, tube supports and consoles.

### Background of the invention

During the mounting of tube lengths, most often in process industry buildings and in connection with process industry a large amount of tubes will often be mounted, whereby regard shall be taken to the extensions appearing due to changes of temperature inside and outside of the tubes.

Further one needs to consider vibrations occurring due to other process equipment such as pumps and pressure impacts travelling through the tube system, which vibrations and impacts lead to that the tubes will become worn and optionally corroded in connection thereto.

Normally the tubes are mounted using tube straps, which are manufactured to fit different tube diameters, which straps are tightened around the tubes and are secured to e.g., a console using nuts on either side of the console.

Often, different beddings are used for the tubes but these are then provided, unless not manufactured at the site, in one size to each tube in the form of flat plates having a thickness adapted for the particular purpose.

US-A-1,646,423 describes a cradle for a pipe line drawing where relatively large diameters are used. The cradle has an outer contour being congruent to the outer contour of the tube and is used to receive tube loads and transfer these to the ground socket to which the cradle is attached to.

JP-A-9280424, corresponding to the preamble of claim 1, describes another type of fastening means where the tube rests in a cradle placed on a console or to a wall and where the tube is fixed to the cradle by means of overlapping tube straps. The width of the cradle may be adjusted by means of a bolt running through the cradle, which bolt can be lengthened or shortened as desired and thereby increasing or decreasing the distance between the parts of the cradle.

DE-U-7412348 relates to a heavy tube holder comprising a double cradle, which is held together by means of double bolts, The cradles comprise dampening material against which the tubes rest.

DE-C-2,745,094 relates to a system for fastening, in particular, large tubes, i.e., tubes having a large diameter, by means of woundable straps fastened in docks placed at the aide. The tubes may be stabilized using fixed beddings placed in the ground socket in which socket the tightening devices of the straps are placed as well.

The drawback using beddings of the above prior art is that they have restricted flexibility with regard to tube size and the socket to which the tubes are to be fastened.

### Summary of the present invention

The present invention relates to the solution of these problems by providing a flexible bedding which i.a., can be used for more tube sizes, which can be used at and be fixed to tube straps present in a simple way. Further the bedding consists of a unity which can be joined to form a cradle or U-wedge to stabilize tubes sidewise.

### Detailed description of the present invention

In particular the present invention relates to a bedding unit comprising a wedge formed unit to be brought together with a unit of the same kind to form a cradle to receive a tube in connection with the mounting of said tube, which unit is characterized in that the unit comprises a plate from which extend two arms which are parallel to each other, that the arms are wedge shaped in the longitudinal direction of the unit, that one arm has a cross going bottom section, that the arm and said bottom section have, in a cross section thereof, a sidewise widening wedge shape and that the distance between the arms is equal to the width of the arm.

In a preferred embodiment the bedding unit has a wedge shaped space between said plate and said bottom section to receive part of the arm.

In another preferred embodiment the plate has a U-shaped recess.

In a further preferred embodiment the free width of the bottom section is equal to the width of the arm.

The invention will be described in the following more in detail with reference to a preferred embodiment, however, without being restricted hereto. The detailed description is made with reference to the accompanying drawings, wherein
FIG. 1 shows a bedding unit according to the present invention in a top view,
FIG. 2 shows the unit according to FIG. 1 in a lateral view,
FIG. 3 shows the unit according to FIG. 1 in a cross section along line III-III of FIG. 1,

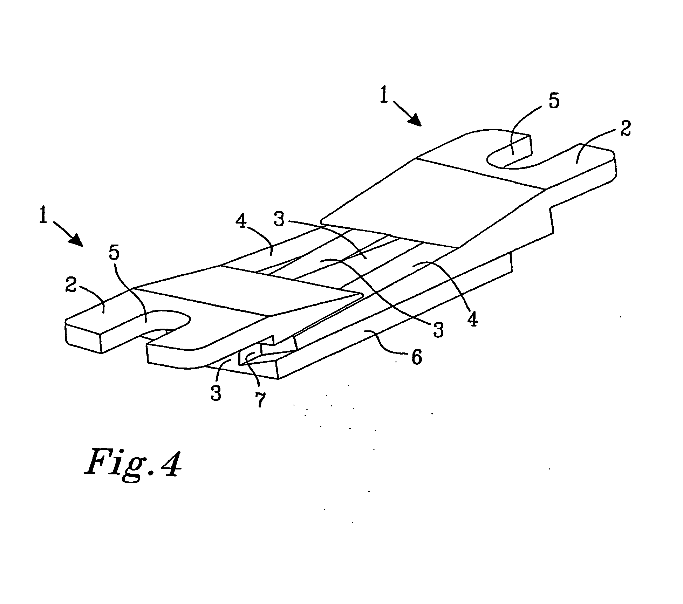

FIG. 4 shows a perspective view of a composed unit comprising two units according to FIG. 1 and
FIG. 5 shows a composed unit according to FIG. 4 used at a tube mounting.

1 denotes a generally rectangular bedding unit. The bedding unit comprises rear plate 2 from which two arms 3 and 4 extend in parallel to each other, and at a certain distance from each other form a longitudinal fork. The rear plate 2 has at its rear end a semicircular recess 5, which optionally is drawn to a U-shape. The plate 2 is planar wedge shaped tapering forward, whereby the plate 2 on its one side forms a wedge shaped space 7 to a bottom section 6 of the arm 3 and whereby the wedge form of the plate 2 converts into the arm 4 to form this. The wedge shaped space 7 thereby points rearwards In relation to the wedge shape of the arms 3 and 4, in general. The arm 4 has in cross section an outwardly tapering wedge shape where the upper sides of the arms 3 and 4 run in a common plane. The arm 4 is likewise forwardly wedge shaped in the longitudinal direction of the unit. The arm 3 shows a forwardly running wedge shaped part which converts into a bottom section 6 having a larger width than the arm 3, which bottom section 6 is sidewise wedge formed widening. The free width of the bottom section 6 is equal to the width of the arm 4.

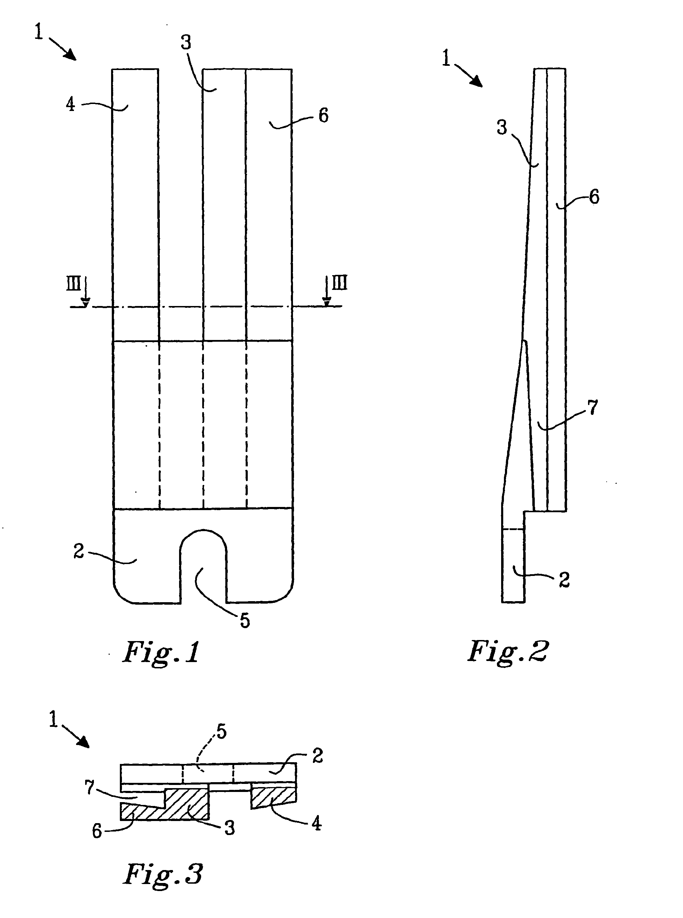

The different wedge shapes of the arms 3 and 4 are evident from FIG. 2 and 3. The wedge shaped space 7, or rather that part of the plate 2 forming the space 7 is ¼ to 1/3 of the total length of the bedding unit depending of the total size of the unit. The smaller unit, the larger is the difference.

The wedge angle of the arms 3, in particular its bottom section 6, and 4 sidewise (FIG. 3) is about 8°, but can vary within the scope of the present invention from 3° to 20°, but even up to 45°.

At the joining of two units the wedge form of the arm 4 shall thus fit into the wedge form of the bottom section 6 of the arm 3.

The distance between the arms 3 and 4 is equal to the width of the arm 3, as well as the width of the free part of the bottom section 6 is equal to the width of the arm 4.

By means of the outwardly widening edge form of the bottom section 6 and the outwardly tapering wedge form of the arm 4, a locking of the arms 3 and 4 is obtained in such a way that the sidewise directed pressure and movements obtained by movements in a mounted tube will not allow a sidewise displacement of the arms but these will maintain their positions beneath such a tube.

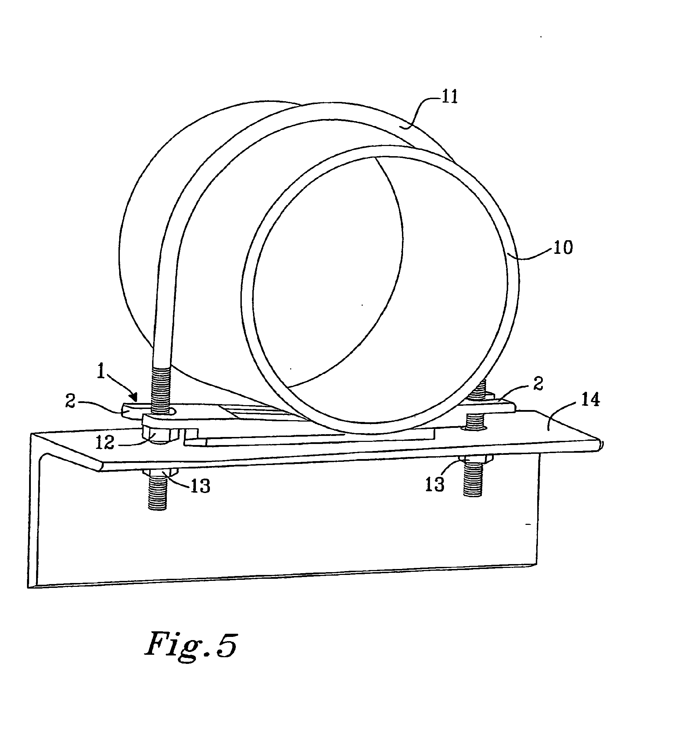

FIG. 5 shows a mounting of a tube 10 together with two beddings 1 in accordance with the present invention and by means of a tube strap 11. The tube strap 11 is hereby placed over the tube 10 and down through the recesses 5 of the units 1 and further through a supporting beam 14, whereby distance-locking nuts 12 are placed under the plate 2 on the upper side of the beam 14. The strap 11 is then fixed by means of a nut 13 on the underside of the beam 14.

## Claims

1. A bedding unit (1) comprising a wedge formed unit intended to be joined to a similar unit to form a cradle to receive a tube in connection with the mounting of said tube, **characterized in that** each unit (1) comprises a plate (2) from one side of which extend two parallel arms (3, 4) to form an oblong unit (1), whereby the arms (3, 4) are wedge formed designed in the longitudinal direction of the unit starting from said plate (2), that a first arm (3) has a cross going bottom section (6) in a plane beneath said first and second arms (3, 4), that a second arm (4) and said bottom section (6) have each, in a cross section thereof, a sidewise widening wedge shape and that the distance between the first and second arms (3, 4) is equal to the width of the second arm (4).

2. The bedding unit according to claim 1, **characterized in that** it has a wedge shaped space (7) between said plate (2) and said bottom section (6) to receive part of the second arm (4).

3. The bedding unit according to claims 1-2, **characterized in that** the plate (2) has a U-shaped recess (5).

4. The bedding unit according to claims 1-3, **characterized in that** the free width of the bottom section (6) is equal to the width of said second arm (4).

## Patentansprüche

1. Auflagereinheit (1) umfassend eine keilförmige Einheit, welche vorgesehen ist, um mit einer gleichartigen Einheit verbunden zu werden, um ein Gestell auszubilden, um ein Rohr in Verbindung mit dem Anbringen des Rohrs aufzunehmen, **dadurch gekennzeichnet, dass** jede Einheit (1) eine Platte (2) umfasst, von welcher sich von einer Seite zwei Arme (3, 4) parallel erstrecken, um eine längliche Einheit (1) auszubilden, wobei die Arme (3, 4) in der Längsrichtung der Einheit beginnend von der Platte (2) keilförmig ausgestaltet sind, dass ein erster Arm (3) einen querverlaufenden Bodenabschnitt (6) in einer Ebene unterhalb dem ersten und zweiten Arm (3, 4) aufweist, dass ein zweiter Arm (4) und der Bodenabschnitt (6) jeweils in einem Querschnitt davon eine seitlich sich weitende Keilform aufweisen und dass der Abstand zwischen dem ersten und zweiten Arm (3, 4) gleich der Breite des zweiten Arms (4) ist.

2. Auflagereinheit nach Anspruch 1, **dadurch gekennzeichnet, dass** sie einen keilförmigen Raum (7) zwischen der Platte (2) und dem Bodenabschnitt (6) aufweist, um einen Teil des zweiten Arms (4) aufzunehmen.

3. Auflagereinheit nach Ansprüchen 1-2, **dadurch gekennzeichnet, dass** die Platte (2) eine U-förmige Aussparung (5) aufweist.

4. Auflagereinheit nach Ansprüchen 1-3, **dadurch gekennzeichnet, dass** die freie Breite des Bodenabschnitts (6) gleich der Breite des zweiten Arms (4) ist.

## Revendications

1. Unité de pose (1) comprenant une unité en forme de coin destinée à être assemblée à une unité similaire pour former un berceau pour recevoir un tube en liaison avec le dispositif de fixation dudit tube, **caractérisée en ce que** chaque unité (1) comprend une plaque (2) depuis un côté de laquelle s'étendent deux bras parallèles (3, 4) pour former une unité oblongue (1), les bras (3, 4) ayant ainsi une conception en forme de coin dans la direction longitudinale de l'unité en partant de ladite plaque (2), **en ce qu'**un premier bras (3) a une section inférieure transversale (6) dans un plan en dessous desdits premier et deuxième bras (3, 4), **en ce qu'**un deuxième bras (4) et ladite section inférieure (6) ont chacun, en coupe transversale, une forme de coin s'élargissant transversalement et **en ce que** la distance entre les premier et deuxième bras (3, 4) est égale à la largeur du deuxième bras (4).

2. Unité de pose selon la revendication 1, **caractérisée en ce qu'**elle comprend un espace en forme de coin (7) entre ladite plaque (2) et ladite section inférieure (6) pour recevoir une partie du deuxième bras (4).

3. Unité de pose selon les revendications 1 et 2, **caractérisée en ce que** la plaque (2) a un évidement en U (5).

4. Unité de pose selon les revendications 1 à 3, **caractérisée en ce que** la largeur libre de la section inférieure (6) est égale à la largeur dudit deuxième bras (4).
